# FASCICULE DE BREVET EUROPEEN

(11) **EP 0 993 057 B1**
(45) Date de publication et mention de la délivrance du brevet: **26.05.2004**
(21) Numéro de dépôt: 99402287.9
(22) Date de dépôt: 20.09.1999
(51) Int. Cl.: H01M 4/48, H01M 4/52

(54) **Matière active cathodique pour générateur électrochimique rechargeable au lithium**
Kathodisches Aktivmaterial für Lithium-Akkumulator
Cathodic active mass for lithium rechargeable battery

(30) Priorité: 01.10.1998 FR 9812289
(43) Date de publication de la demande: 12.04.2000
(73) Titulaire: ALCATEL, 75008 Paris (FR)
(72) Inventeur: Peres, Jean-Paul, 33700 Mérignac (FR); Lecerf, André, 35740 Pace (FR); Biensan, Philippe, 33360 Carignan (FR)
(74) Mandataire: Vieillefosse, Jean-Claude

(56) Documents cités:
- EP-A- 0 744 780

## Description

La présente invention concerne une matière active cathodique pour générateur électrochimique rechargeable au lithium. Elle concerne aussi un procédé de fabrication de cette matière active. Elle s'étend en outre à l'électrode positive et au générateur électrochimique la contenant.

Les oxydes lithiés de métaux de transition sont connus comme matière active cathodique utilisable dans les générateurs au lithium, plus particulièrement LiNiO₂ et LiCoO₂. Le cobalt est un métal coûteux dont l'approvisionnement peut poser des problèmes. On s'attache donc plutôt à améliorer les caractéristiques de la matière active cathodique LiNiO₂.

D'une part la matière active LiNiO₂ possède une forte instabilité thermique ce qui présente un risque important pour la sécurité de l'utilisateur. Une solution pour stabiliser la matière active est proposée par le document EP-0 782 206 qui décrit une matière active cathodique basé sur LiNiO₂ substitué par Al et éventuellement Co et/ou Mn. Mais ce matériau possède une capacité peu élevée.

D'autre part la matière active LiNiO₂ offre des performances insuffisantes notamment en décharge à régime rapide ou à haute température. Le document EP-0 744 780 propose de substituer LiNiO₂ pour obtenir un matériau dont la capacité initiale est du même ordre que celle de LiNiO₂ mais dont les performances à régime rapide ou à haute température sont améliorées. Les caractéristiques de cyclage en régime rapide sont améliorées d'une part par substitution d'une partie du nickel par Mg, Ca, Sr, ou Ba, ou d'autre part par substitution par Al ou Cr d'une quantité inférieure à 10% du Ni. Des améliorations sont aussi observées avec une combinaison de Al, Mg, B et Co. Toutefois ce matériau présente une stabilité thermique insuffisante pour assurer la sécurité de l'utilisateur.

La présente invention a pour but de proposer une matière active cathodique, obtenue par substitution d'une partie du nickel de LiNiO₂, possédant à la fois une capacité initiale élevée et une bonne stabilité en cyclage, et qui garantisse la sécurité de l'utilisateur.

L'objet de la présente invention est une matière active cathodique pour générateur électrochimique au lithium qui est un oxyde de nickel et de lithium dans lequel une partie du nickel a été substitué par trois éléments, caractérisé en ce que ladite matière active a une structure cristalline monoclinique et une formule générale qui est la suivante :

Li_{L} Ni_{(1-C-A-M)} Co_{C} Al_{A} Mg_{M} O₂

avec :
0,05 ≤ L ≤ 1,03
0,05 ≤ C ≤ 0,20
0,11 ≤ A ≤ 0,20
0,01 ≤ M ≤ 0,05
et C/A ≥ 0,60

Selon une forme d'exécution préférentielle de la présente invention, la matière active a une formule générale dans laquelle A = 0,14±0,03 et C = 0,15±0,05.

Le diagramme de diffraction des rayons X de la matière active est réalisé dans les conditions suivantes::

| | |
|---|---|
| tension du tube | 40 kV |
| courant de tube | 30 mA |
| vitesse de balayage | 0,15 degré/mn |
| raie Kα₁ du cuivre | 0,154056 nm |

De préférence, le rapport des intensités de la raie [003] à la raie [104] du diagramme de diffraction des rayons X de la matière active est au moins égal à 1,45. Pour des rapports inférieurs à cette valeur, la capacité de la matière active est moindre. De préférence encore ce rapport est au moins égal à 2,0.

La structure cristalline de la matière active selon l'invention est déformée par la substitution, et diffère de la structure de LiNiO₂ donnée par la référence JCPDS 9-0063 ("Joint Committee on Powder Diffraction"). Par exemple pour une matière active selon l'invention de formule Li_{1,00} Ni_{0,72} Co_{0,10} Al_{0,15} Mg_{0,03} O₂, la structure monoclinique a pour paramètres de maille a = 0,496nm, b = 0,286nm, c = 0,502nm et β = 109,28°.

La présente invention a aussi pour objet un procédé pour la fabrication de la matière électrochimiquement active définie précédemment comprenant une étape de traitement thermique à une température au moins égale à 750°C, de préférence comprise entre 750 et 800°C, pendant une durée au moins égale à 10 heures, de préférence de 15 à 25 heures, suivi d'un refroidissement lent à une vitesse au plus égale à 1°C/mn comprenant un palier intermédiaire à une température comprise entre 600 et 700°C.

La présente invention a également pour objet une électrode positive de générateur électrochimique rechargeable au lithium contenant une matière active cathodique telle que décrite précédemment, comprenant en outre un liant fluoré et un matériau conducteur.

La présente invention a encore pour objet un générateur électrochimique rechargeable au lithium, contenant au moins une électrode négative et au moins une électrode positive analogue à celle mentionnée précédemment, dans lequel la matière active anodique est un matériau carboné susceptible d'insérer du lithium dans sa structure choisi parmi le graphite, le coke, le noir de carbone et le carbone vitreux.

D'autres caractéristiques et avantages de la présente invention apparaîtront au cours des exemples suivants de réalisation, donnés bien entendu à titre illustratif et non limitatif, et dans le dessin annexé sur lequel :
- la figure 1 est une coupe schématique éclatée d'un générateur électrochimique de type bouton comprenant l'électrode positive contenant la matière active selon l'invention,
- la figure 2 est le diagramme de diffraction des rayons X pour une matière active cathodique Li Ni_{0,75} Co_{0,15} Al_{0,10} O₂ de l'art antérieur, l'angle 2θ est donné en abscisse et l'intensité I relative des pics est en ordonnée,
- la figure 3 est analogue à la figure 2 pour une matière active cathodique Li Ni_{0,70} Co_{0,15} Al_{A0,15} O₂ de l'art antérieur,
- la figure 4 est analogue à la figure 2 pour une matière active cathodique Li Ni_{0,70} Co_{0,09} Al_{0,09} Mg_{0,12} O₂ de l'art antérieur,
- la figure 5 est analogue à la figure 2 pour une matière active cathodique Li Ni_{0,72} Co_{0,10} Al_{0,15} Mg_{0,03} O₂ selon l'invention,
- la figure 6 représente l'évolution de la capacité déchargée C en mAh/g en fonction du nombre de cycles N lors d'un cyclage à 60°C d'une matière active cathodique Li Ni_{0,72} Co_{0,10} Al_{0,15} Mg_{0,03} O₂ selon l'invention.

### EXEMPLE 1 :

On prépare les matières actives X₁ et Y₁ selon l'art antérieur de formule respective :

X₁ : Li Ni_{0,75} Co_{0,15} Al_{0,10} O₂

Y₁ : Li Ni_{0,70} Co_{0,15} Al_{A0,15} O₂

Les matières actives X₁ et Y₁ sont fabriquées de la manière décrite dans le document EP-0 782 206 à partir du mélange des hydroxydes β-Ni₁₋ₓCoₓ(OH)₂ synthétisé par co-précipitation, Al(OH)₃ et LiOH. Le mélange est traité 40 heures à 720°C en présence d'oxygène.

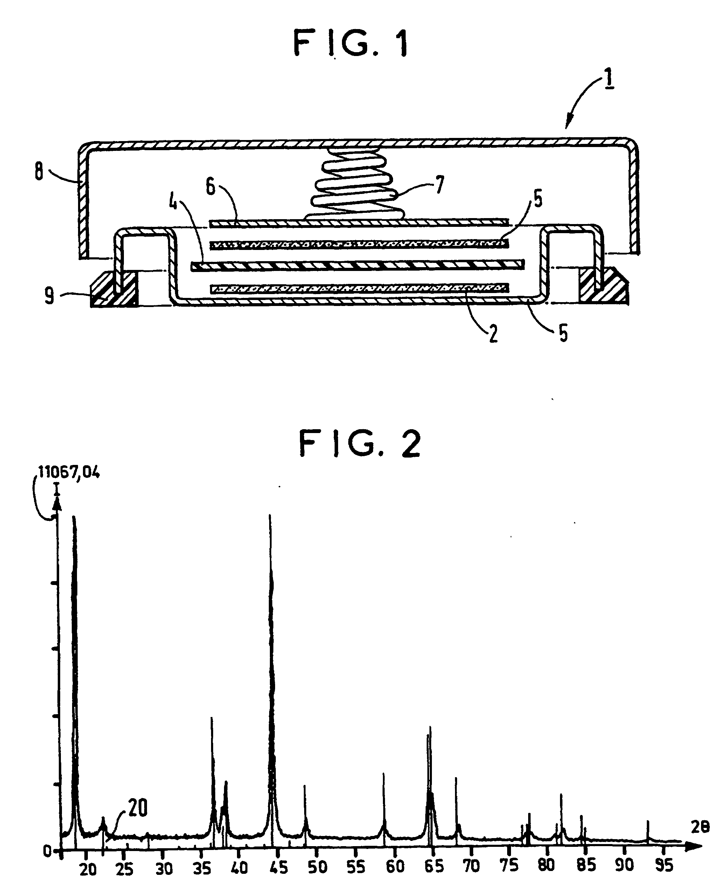

La synthèse de l'hydroxyde mixte β-Ni₁₋ₓCOₓ(OH)₂ met habituellement en oeuvre des sels métalliques, tels que des sulfates, dont il est impossible de se débarrasser totalement et qui consomment du lithium. Dans le cas de l'emploi de sulfates pour obtenir cet hydroxyde, le diagramme de diffraction des rayons X de l'échantillon X₁ (figure 2) montre la présence de Li₂SO₄ représenté par un pic supplémentaire 20 vers 2θ = 22. En outre le rapport des intensités de la raie [003], située à environ 2θ=18, à la raie [104], situé à environ 2θ=45, sur le diagramme de diffraction des rayons X de l'échantillon X₁ est bien inférieur à 1,45.

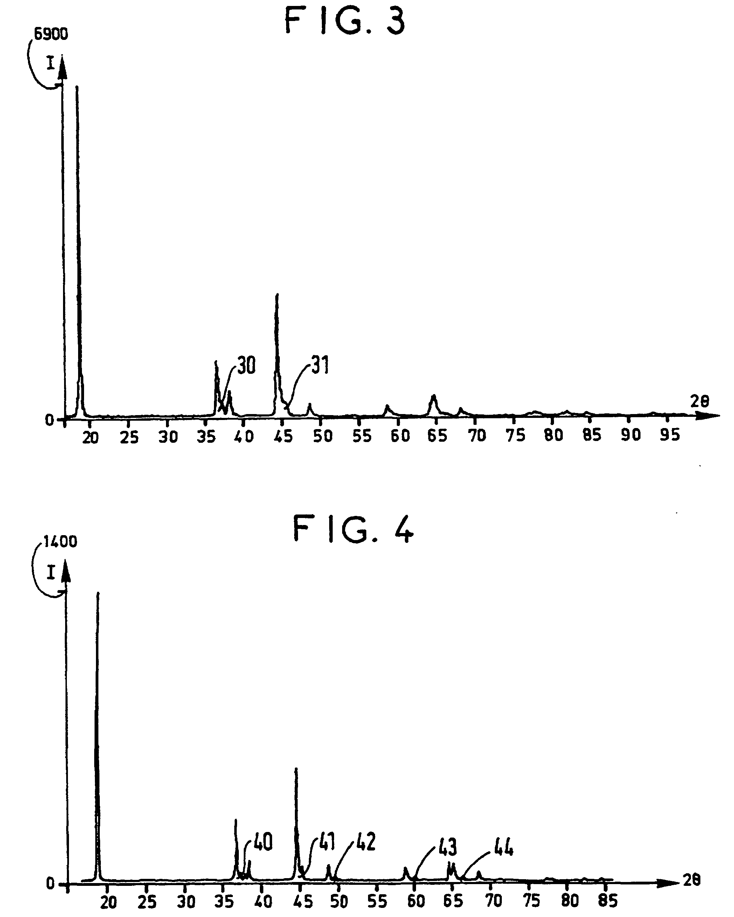

Sur le diagramme de diffraction de rayons X de l'échantillon Y₁, contenant plus d'aluminium, un épaulement 30, 31 à la base des pics principaux montre que l'aluminium est réparti de manière inhomogène (figure 3).

### EXEMPLE 2 :

On prépare une matière active Z₁ selon l'art antérieur de formule :

Z₁ : Li Ni_{0,70} Co_{0,09} Al_{0,09} Mg_{0,12} O₂

La matière active Z₁ est fabriquée de la manière décrite dans le document EP-0 744 780 à partir du mélange de Al(NO₃)₃, Co₃O₄, Mg(NO₃)₂, Ni(OH)₂ et LiNO₃ dans un rapport Li/autres éléments de 1,05. Le mélange est traité à 650°C sous un balayage d'oxygène.

Sur le diagramme de diffraction de rayons X de l'échantillon Z₁, un dédoublement 40 à 44 des pics principaux montre que l'aluminium et le cobalt sont répartis de manière inhomogène (figure 4).

### EXEMPLE 3 :

On prépare des matières actives J et K selon la présente invention de formule respective :

J Li Ni_{0,73} Co_{0,10} Al_{0,15} Mg_{0,02} O₂

K Li Ni_{0,72} Co_{0,10} Al_{0,15} Mg_{0,03} O₂

Les matières actives J et K sont fabriquées à partir d'un mélange en quantité stoechiométrique de nitrate de nickel, de cobalt, d'aluminium et de magnésium en solution dans de l'eau distillée. L'hydroxyde de lithium en solution dans une solution d'ammoniaque est ajouté au mélange. Les solvants sont évaporés et le produit obtenu est séché sous vide à 120°C pendant 15 heures. Le produit sec est ensuite soumis à un traitement thermique à une température de 750°C en présence d'oxygène pendant une durée de 20 heures, suivi d'un refroidissement lent à 1°C/mn avec un palier intermédiaire à 650°C.

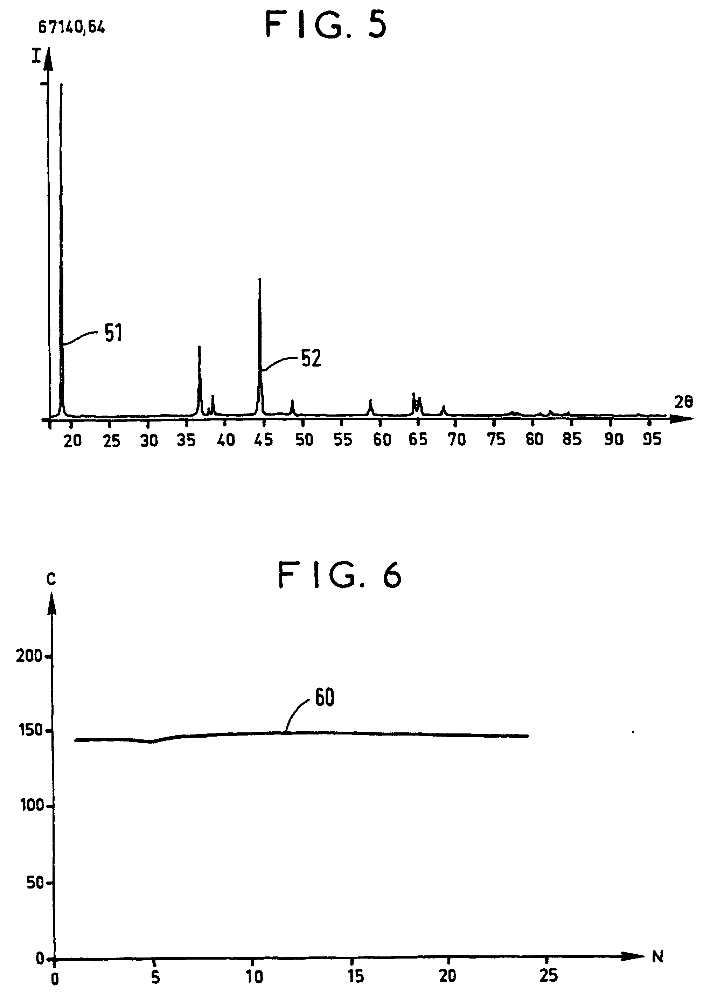

Le diagramme de diffraction de rayons X de l'échantillon K est donné sur la figure 5. On n'observe ni trace de polluant, ni épaulement ou dédoublement des raies. Les éléments constituant la matière active sont répartis de manière homogène. L'échantillon K a une structure monoclinique avec les paramètres de maille suivants : a = 0,496nm, b = 0,286nm, c = 0,502nm et β = 109,28°.

Le rapport des intensités de la raie [003] 51, située à environ 2θ=18, à la raie [104] 52, situé à environ 2θ=45, sur le diagramme de diffraction des rayons X de l'échantillon K est égal à 2,0.

### EXEMPLE 4 :

A titre de comparaison, on prépare les matières actives X₂ et Y₂ de mêmes formules que X₁ et Y₁ respectivement. La fabrication des matières actives X₂ et Y₂ est analogue à celle décrite dans l'exemple 3, à l'exception du fait qu'on ne met pas de nitrate de magnésium.

### EXEMPLE 5 :

A titre de comparaison, on prépare une matière active Z₂ de même formule que Z₁. La fabrication de la matière active Z₂ est analogue à celle décrite dans l'exemple 3.

L'évaluation électrochimique de chaque échantillon de matière active cathodique nécessite la fabrication d'une électrode positive. On réalise un mélange comprenant 75% en poids de matière électrochimiquement active en poudre dont 95% des particules ont une taille au moins égale à 3µm, 15% en poids de matériau conducteur composé de noir de carbone et de graphite et 10% en poids d'un liant qui est le polytétrafluoroéthylène (PTFE). En ajoutant de l'éthanol, on obtient une pâte qui est étalée sur un support inerte sous forme d'une feuille. Un disque de 12mm de diamètre découpé dans la feuille, est incrusté dans une grille en aluminium servant de collecteur de courant et séché.

On obtient une électrode positive qui est utilisée pour assembler un générateur électrochimique 1 rechargeable au lithium de type bouton tel que représenté sur la figure 1. L'électrode positive 2 est déposée dans la coupelle 3 du générateur. Le séparateur 4 est constitué de deux feuilles de polypropylène microporeux, de référence commerciale "CELGARD 2400", encadrant un feutre de polypropylène de la marque "VILEDON" servant de réservoir d'électrolyte. L'électrode négative 5 est une pastille de lithium métallique de 15mm de diamètre. Une cale en inox 6 assure la reprise du courant et un ressort 7 maintient le contact entre les différents éléments du générateur 1.

L'ensemble est imprégné d'un électrolyte qui est une solution d'un sel de lithium dans un solvant non-aqueux. Le solvant non-aqueux se compose de 20% en poids de carbonate de propylène (PC), 20% en poids de carbonate d'éthylène (EC) et de 60% en poids de carbonate de diméthyle (DMC) dans lequel est dissous de l'hexafluorophosphate de lithium LiPF₆ à la concentration de 1M. Après introduction de l'électrolyte, le générateur 1 est fermé de manière étanche avec un couvercle 8 par l'intermédiaire d'un joint 9.

Après deux cycles de charge/décharge à température ambiante, la stabilité thermique de la matière active est évaluée par le test dit "D.S.C." (Differential Scanning Calorimetry) qui est une technique déterminant la variation du flux thermique dans un échantillon soumis à une programmation en température. Lorsqu'un matériau est chauffé ou refroidi, sa structure évolue et les transformations se réalisent avec échange de chaleur. L'analyse D.S.C. renseigne sur la température de transformation (pic endothermique ou exothermique) et sur l'énergie thermique requise pour la transformation (surface du pic).

Dans le cas présent, ces mesures permettent d'évaluer la stabilité thermique de la matière active. On effectue d'abord un cyclage à température ambiante (20°C) :
- charge à 0,05lc jusqu'à une tension d'arrêt de 4,1V,
- décharge à 0,05lc jusqu'à une tension d'arrêt de 3V,
- recharge à 0,05lc jusqu'à une tension d'arrêt de 4,1V.

On effectue alors une charge complémentaire jusqu'à une tension égale à Vr qui est la tension maximale mesurée par rapport au lithium à partir de laquelle les réactions qui se produisent deviennent violentes. Puis on prélève 3mg de matière active à l'état chargé sur une électrode positive imprégnée d'électrolyte. L'échantillon de matière active est chauffé de 20°C à 500°C à une vitesse de 10°C/mn sous argon.

Le test de cyclage électrochimique à température ambiante (20°C) est réalisé dans les conditions suivantes, où lc est le courant théorique nécessaire pour décharger la capacité nominale d'un accumulateur en 1 heure :
- charge à 0,05lc jusqu'à une tension d'arrêt de 4,1V,
- décharge à 0,05lc jusqu'à une tension d'arrêt de 3V.

La capacité chargée Cc au prémier cycle et la capacité déchargée Cd au deuxième cycle à température ambiante sont mesurées.

La mesure de la capacité réversible à température élevée est réalisée dans les conditions suivantes. On effectue d'abord deux cycles à température ambiante (20°C) dans les conditions ci-dessus ; puis on réalise deux cycles à 60°C dans les conditions suivantes :
- charge à 0,1lc jusqu'à une tension d'arrêt de 4,1V,
- décharge à 0,2lc jusqu'à une tension d'arrêt de 3V.

La capacité déchargée Cd au deuxième cycle à température élevée est mesurée.

Les résultats de l'évaluation sont donnés dans le tableau ci-dessous.

Dans les résultats de l'analyse D.S.C., Vr est la tension maximale mesurée par rapport au lithium à partir de laquelle les réactions qui se produisent deviennent violentes, et Tp est la température en °C à laquelle se produit une réaction violente lorsque la matière active a été chargée jusqu'à une tension de 4,2V, Tp représente la limite de stabilité thermique du matériau.

Dans les résultats de cyclage, Cc est la capacité chargée au premier cycle en mAh/g, Cd est la capacité déchargée au deuxième cycle en mAh/g, et P est la perte de capacité en cyclage à 60°C en % par cycle sur 24 cycles.

| | Vr | Tp | Cc à 20°C | Cd à 20°C | Cd à 60°C | P |
|---|---|---|---|---|---|---|
| X₁ | 4,2 | 250 | 150 | 110 | 130 | 0,61 |
| Y₁ | 4,2 | 260 | 145 | 105 | 130 | 0,58 |
| Z₁ | 4,1 | 260 | - | - | - | - |
| | | | | | | |
| J | > 4,5 | 300 | 172 | 127 | 135 | 0,12 |
| K | > 4,5 | 300 | 170 | 127 | 140 | 0,04 |
| | | | | | | |
| X₂ | > 4,5 | 280 | 175 | 130 | 140 | 0,30 |
| Y₂ | > 4,5 | 290 | 175 | 135 | 145 | 0,20 |
| Z₂ | 4,3 | 290 | - | - | - | - |

Les résultats du test D.S.C. montrent que les échantillons X₁, Y₁ et Z₁ selon l'art antérieur présentent une stabilité thermique insuffisante. En outre pour l'échantillon Z₁ les réactions deviennent violentes à une tension qui est susceptible d'être atteinte au cours du fonctionnement.

Lorsqu'ils sont obtenus par le procédé selon la présente invention, les échantillons X₂ et Y₂ ont des résultats au test D.S.C. qui sont acceptables. L'échantillon Z2 présente un comportement encore insuffisant vis-à-vis de la sécurité.

L'évaluation électrochimique montre que les échantillons J et K selon invention possèdent à la fois une capacité plus élevée et une meilleure stabilité en cyclage que les échantillons X₁ et Y₁ de l'art antérieur. Les échantillons X₂ et Y₂ obtenus par le procédé selon la présente invention présentent des performances améliorées mais leur stabilité en cyclage est moindre que celle des échantillons J et K selon l'invention.

L'exceptionnelle stabilité, même à 60°C, de la capacité de l'échantillon K est visible sur la courbe 60 de la figure 6.

## Revendications

1. Matière active cathodique pour générateur électrochimique rechargeable au lithium qui est un oxyde de nickel lithié substitué par trois éléments comprenant au moins le cobalt et l'aluminium, **caractérisé en ce que** ladite matière a une structure cristalline monoclinique et une formule générale qui est la suivante :
Li_{L} Ni_{(1-C-A-M)} Co_{C} Al_{A} Mg_{M} O₂
avec :
0,05 ≤ L ≤ 1,03
0,05 ≤ C ≤ 0,20
0,11 ≤ A ≤ 0,20
0,01 ≤ M ≤ 0,05
et C/A ≥ 0,60

2. Matière selon la revendication 1, ayant une formule générale dans laquelle A = 0,14±0,03 et C = 0,15±0,05.

3. Matière selon l'une des revendications 1 et 2, dans laquelle le rapport des intensités de la raie [003] à la raie [104] du diagramme de diffraction des rayons X est au moins égal à 1,45.

4. Matière selon la revendication 3, dans laquelle ledit rapport est au moins égal à 2,0.

5. Matière selon l'une des revendications précédentes, de formule générale Li Ni_{0,72} Co_{0,10} Al_{0,15} Mg_{0,03} O₂, dans laquelle ladite structure monoclinique a pour paramètres de maille : a = 0,496nm, b = 0,286nm, c = 0,502nm et β = 109,28°.

6. Matière selon l'une des revendications précédentes, sous la forme d'une poudre dont 95% des particules ont une taille au moins égale à 3µm.

7. Procédé de fabrication d'une matière active cathodique selon l'une des revendications précédentes, comprenant une étape de traitement thermique à une température au moins égale à 750°C pendant une durée au moins égale à 10 heures, suivi d'un refroidissement lent à une vitesse au plus égale à 1°C/mn comprenant un palier intermédiaire à une température comprise entre 600 et 700°C.

8. Procédé selon la revendication 7, dans lequel ledit traitement thermique est effectué à une température comprise entre 750 et 800°C.

9. Procédé selon la revendication 7, dans lequel la durée dudit traitement thermique est comprise entre 15 et 25 heures.

10. Electrode positive de générateur électrochimique rechargeable au lithium contenant une matière active cathodique selon l'une des revendications 1 à 6, comprenant en outre un liant fluoré et un matériau conducteur.

11. Générateur électrochimique rechargeable au lithium contenant au moins une électrode négative et au moins une électrode positive selon la revendication 10, dans lequel la matière active anodique est un matériau carboné susceptible d'insérer du lithium dans sa structure choisi parmi le graphite, le coke, le noir de carbone et le carbone vitreux.

## Patentansprüche

1. Kathodisches Aktivmaterial für einen nachfüllbaren elektrochemischen Generator aus Lithium, bestehend aus einem Lithium-Nickeloxid substituiert durch drei Elemente, welche zumindest Kobalt und Aluminium aufweisen, **dadurch gekennzeichnet, dass** das Material eine monokline kristalline Struktur und eine allgemeine Formel der folgenden Form hat:
Li_{L} Ni_{(1-C-A-M)} Co_{C} Al_{A} Mg_{M} O₂
mit:
0,05 ≤ *L* ≤ 1,03
0,05 ≤ *C* ≤ 0,20
0,11 ≤ *A* ≤ 0,20
0,01 ≤ *M* ≤ 0,05
*und C*/*A* ≥ 0,60

2. Material gemäß Anspruch 1, aufweisend eine allgemeine Formel, in der A = 0,14 ± 0,03 und C = 0,15 ± 0,05 ist.

3. Material gemäß einem der Ansprüche 1 und 2, bei dem das Verhältnis der Intensitäten der Orientierung [003] zur Orientierung [104] des Röntgendiffraktions- Diagramms wenigstens 1,45 ist.

4. Material gemäß Anspruch 3, bei dem das Verhältnis wenigstens 2,0 ist.

5. Material gemäß einem der vorhergehenden Ansprüche der allgemeinen Formel Li Ni_{0,72} Co_{0,10} Al_{0,15} Mg_{0,03} O₂, bei dem die monokline Struktur als Zellenparameter hat: a = 0,496 nm, b = 0,286 nm, c = 0,502 nm und β = 109,28°.

6. Material gemäß einem der vorhergehenden Ansprüche, in der Form eines Pulvers, bei dem 95% der Partikel eine Größe von wenigsten 3 µm haben.

7. Verfahren zur Herstellung von kathodischem Aktivmaterial nach einem der vorhergehenden Ansprüche, aufweisend einen thermischen Behandlungsschritt bei einer Temperatur von wenigstens 750°C während einer Dauer von wenigstens 10 Stunden, gefolgt von einem langsamen Abkühlen mit einer Geschwindigkeit von höchstens 1°C/Minute aufweisend eine Zwischenstufe bei einer Temperatur innerhalb 600 und 700 °C.

8. Verfahren gemäß Anspruch 7, bei dem die thermische Behandlung bei einer Temperatur innerhalb 750 und 800 °C durchgeführt wird.

9. Verfahren gemäß Anspruch 7, bei dem die Dauer der thermischen Behandlung innerhalb 15 und 25 Stunden liegt.

10. Positive Elektrode eines nachfüllbaren elektrochemischen Generators aus Lithium, die das kathodische Aktivmaterial gemäß einem der Ansprüche 1 bis 6 enthält, die weiterhin ein fluoriertes Bindemittel und ein leitendes Material aufweist.

11. Nachfüllbarer elektrochemischer Generator aus Lithium, der wenigstens eine negative Elektrode und wenigstens eine positive Elektrode gemäß Anspruch 10 enthält, bei dem das anodische Aktivmaterial ein kohlenstoffhaltiges Material ausgewählt aus Graphit, Koks, Ruß und gesintertem Kohlenstoff ist, das in der Lage ist, Lithium in seine Struktur einzufügen.

## Claims

1. An active cathode material for a lithium rechargeable electrochemical cell, which material is a lithium-containing nickel oxide substituted by three elements comprising at least cobalt and aluminum, the material being **characterized in that** it has a monoclinic crystal structure and the following general formula:
Li_{L}Ni_{(1-C-A-M)}Co_{C}Al_{A}Mg_{M}O₂
where:
0.05 ≤ L ≤ 1.03;
0.05 ≤ C ≤ 0.20;
0.11 ≤ A ≤ 0.20;
0.01 ≤ M ≤ 0.05; and
C/A ≥ 0.60.

2. A material according to claim 1, having the general formula in which A = 0.14 ± 0.03 and C = 0.15 ± 0.05.

3. A material according to claim 1 or claim 2, in which the ratio of the intensities of the [003] line to the [104] line in the X-ray diffraction pattern is not less than 1.45.

4. A material according to claim 3, in which said ratio is not less than 2.0.

5. A material according to any preceding claim, of general formula LiNi_{0.72}Co_{0.10}Al_{0.15}Mg_{0.03}O₂, in which said monoclinic structure has the following lattice parameters:
a = 0.496 nm;
b = 0.286 nm;
c = 0.502 nm; and
= 109.28°.

6. A material according to any preceding claim, in the form of a powder in which 95% of the particles are of a size not less than 3 µm.

7. A method of manufacturing an active cathode material according to any preceding claim, including a heat treatment step at a temperature of not less than 750°C for a duration of not less than 10 hours, followed by slow cooling at a rate of no more than 1°C/min with an intermediate stage at a temperature lying in the range 600°C to 700°C.

8. A method according to claim 7, in which said heat treatment is performed at a temperature lying in the range 750°C to 800°C.

9. A method according to claim 7, in which the duration of said heat treatment lies in the range 15 hours to 25 hours.

10. A positive electrode for a lithium rechargeable electrochemical cell containing an active cathode material according to any one of claims 1 to 6, further comprising a fluorinated binder and a conducive material.

11. A lithium rechargeable electrochemical cell containing at least one negative electrode and at least one positive electrode according to claim 10, in which the anode active material is a carbon-containing material of structure into which lithium can be inserted, the material being selected from the group comprising: graphite, coke, carbon black, and vitreous carbon.
